# EUROPEAN PATENT APPLICATION

(11) **EP 2 566 181 A1**
(43) Date of publication of application: **06.03.2013**
(21) Application number: 11179480.6
(22) Date of filing: 31.08.2011
(51) Int. Cl.: H04Q 1/14

(54) **Functional module for a telecommunication strip for a telecommunications system**

(71) Applicant: 3M Innovative Properties Company, Saint Paul, MN 55133-3427 (US)
(72) Inventor: Denter, Friedrich, 44575 Castrop-Rauxel (DE); Bund, Christine, 42111 Wuppertal (DE); Edelmann, Wolfgang, 42111 Wuppertal (DE); Hajok, Johann, 44795 Bochum (DE); Szymanski, Guenter, 42279 Wuppertal (DE)
(74) Representative: Bergen, Katja

(57) **Abstract**

The invention provides a functional module for a double-sided termination strip 1 for a telecommunications system, the strip comprising two rows of contact elements 4 along a first side 9 of the strip and two rows of contact elements 4 along an opposed second side 10 of the strip, the contact elements of the first and the second side being accessible for connecting wires 12 therewith. The functional module, which is mounted to the opposed second side of the strip, comprises a housing 21, a printed circuit board 29 with functional elements, the printed circuit board being arranged in the housing, wherein the housing further comprises at least one wire guide element 22, 32, 33, 34, 39 for guiding wires that are connected to the contact elements of the strip.

## Description

The invention relates to a functional module for a double-sided termination strip for a telecommunication system. The invention also relates to a double sided termination strip for a telecommunication system in combination with a functional module.

In the field of telecommunications, numerous customers (also called subscribers) are connected with the exchange (also known as the switch) of a telecommunications company via telecommunications lines and modules. A telecommunications module establishes electrical connections between incoming wires and outgoing wires. A plurality of telecommunications modules can be assembled, possibly with other telecommunications components, at a distribution point, such as a main distribution frame located in the central office of a telecommunications company, an intermediate distribution frame, an outside cabinet which may serve several streets or houses, or a distribution point located, for example in an office building or on a particular floor of an office building. Some telecommunications lines may be permanently connected with first telecommunications modules, and others so called "jumpers", which can be changed, are used to make non-permanent connections between electrical contacts in those first modules and electrical contacts in other modules.

Termination strips comprising a plurality of contact elements are used in telecommunications modules to establish electrical connections between incoming and outgoing wires in a telecommunications system, typically between the wires of system cables and the wires of jumper cables. A plurality of termination strips is typically assembled on a suitable carrier, for example a back-mount frame. Termination strips of various types are well known.

With the continuing expansion of telecommunications services, there is a growing need for telecommunications assemblies to be as compact as possible and, at the same time, for installation procedures to be simplified so that they can be carried out cost-effectively. In the case of termination strips comprising a plurality of contact elements with contacts to which incoming and outgoing wires are to be connected, it is known that a more compact arrangement can be achieved (thereby enabling the density of the connections that can be established in a limited space to be increased) if the connections between the wires and the contacts of the contact element can be made at two opposed longitudinal sides of the strip rather than at only one side. Termination strips of that "double-sided" type offer the advantage that the incoming and outgoing wires can be separated to respective sides of the strip, enabling more efficient use to be made of whatever space is available. Termination strips of the double sided type are described, for example in US 4 618 204, US 5 549 489, US 6 068 503 and US 6 069 951; AU 2006/202891; EP 1 246 317; GB-2 343 563 and WO 2006/132 972.

Double sided termination modules have the advantage, that both sides - the front side and the rear side - may be used for the insertion of functional elements, such as for example over voltage protection modules, splitter modules, measurement modules, test access modules etc.. US 2007/0264852 A1 discloses a double-sided termination module having splitter modules arranged on the rear side. The splitter modules are designed as single line splitters. They do not provide any features for guiding wires. US 2004/0242081 A1 describes a terminal block of a telecommunications distribution point, two terminal strips as well as a functional module. The strips and the module are arranged in a housing, the housing is build of wire guide elements. The functional module itself does not have a separate housing. DE 203 21 811 U1 discloses an overvoltage protection module with a housing as well as a printed circuit board. The overvoltage protection module does not provide any means for guiding wires and wire management.

There is a need for a functional module for a double-sided termination strip, that allows better handling of the termination strip. There is also a need for a double-sided termination strip with a functional module that allows better handling.

The present invention provides a functional module for a double-sided termination strip for a telecommunications system, the strip comprising two rows of contact elements along a first side of the strip and two rows of contact elements along an opposed second side of the strip, the contact elements on both sides of the strip being accessible for connecting wires therewith. The functional module according to the invention, which is mountable to the second side of the strip, comprises a housing, a printed circuit board with functional elements, the printed circuit board being arranged in the housing, wherein the housing further comprises at least one wire guide element for guiding the wires that are connected to the contacts of the termination strip.

The contact elements of the double-sided termination strip may be any kind of contact elements known in the telecommunications industry for connecting wires therewith, e.g. connecting contact elements, switching contact elements and/or disconnection contact elements. For establishing the electrical connection between the wires and the contact elements, the contact elements may provide known connection features such as for example, insulation displacement contact features (IDCs), wire wrap contact features or piercing contact features. The contact elements in the double-sided strip may extend from the first side of the strip to the second side of the strip and may be made out of one piece or they may be made out of several pieces that may be electrically connected with each other inside of the strip. The contact elements may also provide a disconnection point for - depending on the application the strip is used in - electrically connecting and disconnecting the contacts from each other. It is also possible to provide contact elements inside the strip that do not extend from one side to the other. Depending on the kind of contact elements within the strip, the strip may be a connection strip, a switching strip, a disconnection strip or a combination thereof.

The housing of the functional module may be made out of electrically nonconductive material, such as for example plastics. Using plastics for the housing of the functional module provides the advantage of being able to produce it by an injection molding process which offers a lot of advantages and allows for comparably cheap production. The housing may be made out of one piece or out of several pieces that may be attached to each other. According to one embodiment, the housing is made of two symmetrical pieces that are attached to each other.

The functional module may be electrically connected to the contact elements which are arranged on the first side, it may be electrically connected to the contact elements which are arranged on the second side or it may be electrically connected to both contact elements.

According to the invention, the housing further comprises at least one wire guide element for guiding the wires that are electrically connected to the contact elements of the double-sided termination strip. Providing the wire guide elements at the housing of a functional module provides the advantage of being able to manage the wires or wire bundles that are connected to the contact elements of the termination strip at the functional module itself therewith being able to extract the double-sided termination strip together with the functional module out of a frame, rack or profile etc. - e.g. for repairing purposes - and inserting it back without the need of detaching the wires from any "external" wire guide structures.

The functional module according to the invention may be a splitter module, an overvoltage protection module, a test access module, a monitoring module, a bridging module or a combination thereof or any other functional module that is known in the telecommunications industry.

The functional module is attached to the opposed second side of the double-sided termination strip. The functional module is connected to the contact elements of the termination strip. It may be electrically and/or mechanically connected to the contact elements of the termination strip. Positioning the functional module at the opposite second or the rear side of the termination strip provides the advantage, that the first or front side of the termination strip is still accessible. Wires may be electrically connected to or disconnected from the first side without the need of unplugging any functional modules. If the functional module is an overvoltage protection module the inventive arrangement provides the additional effect, that during rewiring of the terminal strip the electronic equipment of the telecommunications system, such as for example DSLAM or MSAN, are still protected.

According to one embodiment of the invention the housing has a shape of a rectangular prism with two opposed lateral faces, two opposed transverse sides and two opposed longitudinal sides. The dimensions of the housing are selected such, that it is possible to mount several double-sided termination strips with functional modules attached thereto in a space saving way, parallel to each other e.g. on a back-mount frame, a rack or a profile. It is advantageous if the dimensions of the housing are selected such that the functional module fits into the space behind the termination strip without the need of amending the distance of the strips. In other words the dimensions are selected such that the functional module fits to the pitch of the strips.

According to another embodiment of the invention the printed circuit board of the functional module comprises at least one contact area for making electrical connection to at least one contact element of the strip. The contact area may provide at least one finger shaped protrusion with at least one contact pad for making an electrical connection to at least one contact element of the strip. Contact pads are a known means for making an electrical connection between a contact element of a termination strip and a printed circuit board. The production costs for such contact pads are reasonable and they provide a reliable connection element. In an alternative embodiment, the functional module may comprise contact elements or metal pins or projections soldered, welded or screwed to a printed circuit board and extending for an edge of said printed circuit board for establishing the electrical connection between the termination strip and the functional module.

The housing of the functional module may further comprise at least one channel structure for guiding wires. According to one embodiment the functional module comprises four channel structures two on each side. Any other number of channel structures is possible, too. The channel structure may be integrated into the rectangular design of the housing such that the housing and the channel structure have the shape of a rectangular prism. In other words the housing with the channel structures are arranged within the rectangular prism such that it fits to the pitch of the strips. If the housing is made by injection molding the channel structure can be made in the same step as the housing itself is made. The channel structure of the housing may comprise a base and at least one side wall wherein the base is parallel to at least one of the lateral faces and the at least one side wall is parallel at least one of the transverse sides of the housing. The wires may be guided along the base and parallel to the side wall.

The housing may also comprise at least one rib as an additional means for guiding wires. The rib may be arranged at the border of the channel structure parallel to and spaced apart from the side wall of the channel structure for holding the wires in the channel structure, such that no wires protrude from the channel when the terminal strip together with the functional module is removed from or inserted back onto e.g. the back-mount frame. The dimensions of the rib are selected such, that the housing with the channel and the rib fits to the pitch of the strip. The rib may extend along the entire length of the transverse side of the termination strip. It is also possible that the housing comprises several ribs along the transverse side of the termination strip.

The housing of the functional module may also comprise at least one holder, which is arranged parallel and spaced apart from the base of the channel structure to cover the cannel. The dimensions of the holder are selected such, that the housing with the holder and the rib fits to the pitch of the strips. The holder is useful for holding the wires in the channel structure such that no wires protrude from the channel when the terminal strip together with the functional module is removed from or inserted into the back-mount frame such that the wires of two functional modules placed next to each other do not interact with each other during movement of one of the terminal strips. The holder may be ring shaped. Any other suitable shape of the holder is possible, too, such as for example U-shaped, C-shaped etc.. The wires or wire bundles may also be attached to the holder, for example by cable ties. The holder may even be shaped as a finger or several parallel fingers or even as a plate. It is also possible that the rib or ribs provide holder extending rectangular from the rib and parallel to the base to cover the channel. Several holders may be arranged in one plane to cover the channel structure. The holders may extend from the side wall over the channel and/or they may extend from the rib over the channel. They may be arranged in an alternating way such that it is still possible to place wires in the channel structure without the need of inserting them after detaching them from the contact elements of the terminal strip.

According to another embodiment of the invention the functional module is an overvoltage protection module. In such a case, the module may comprise an earth contact in the shape of a spring contact that protrudes from the housing of the functional module for making an electrical connection between the functional module and a grounding system of the telecommunications system outside the functional module. Preferably the spring contact protrudes from the transversal side of the housing of the functional module thereby being able to electrically connect the grounding system. They may have any known shape, such as for example a C-shape.

The invention also provides a double-sided termination strip for a telecommunications system, with two rows of contact elements along a first side of the strip and two rows of contact elements along an opposed second side of the strip, together with a functional module according to the embodiments described above being electrically and mechanically connected to the double-sided termination strip. The functional module may be mounted to the second side of the strip and may be electrically connected to the contacts on the second side of the strip.

The invention will now be described in more detail with reference to the following Figures exemplifying particular embodiments of the invention:
- Fig. 1: is a side view of a termination strip fixed to a back-mount frame;
- Fig. 2: is a side view of the termination strip of Fig. 1 fixed to a back-mount frame with a functional module according to the invention;
- Fig. 3: is a perspective view of the termination strip of Figs. 1 and 2 with the functional module of Fig. 2 according to the invention;
- Fig. 4a,b: are a perspective views of the functional module of the Figs 2 to 3;
- Fig. 4c: is an exploded view of the functional module of the Figs. 2 to 3;
- Fig. 5: schematic drawing of a termination strip with a functional module according to the invention with wires being managed by wire guide elements on the functional module;
- Fig. 6: is a perspective view of the printed circuit board of the functional module according to the invention;
- Fig. 7 a,b: are detailed perspective views of the front side and the rear side of an earth contact of the functional module according to the invention; and
- Fig. 8: is a perspective view of one part of the housing of the functional module according to the invention.

Herein below various embodiments of the present invention are described and shown in the drawings wherein like elements are provided with the same reference numbers.

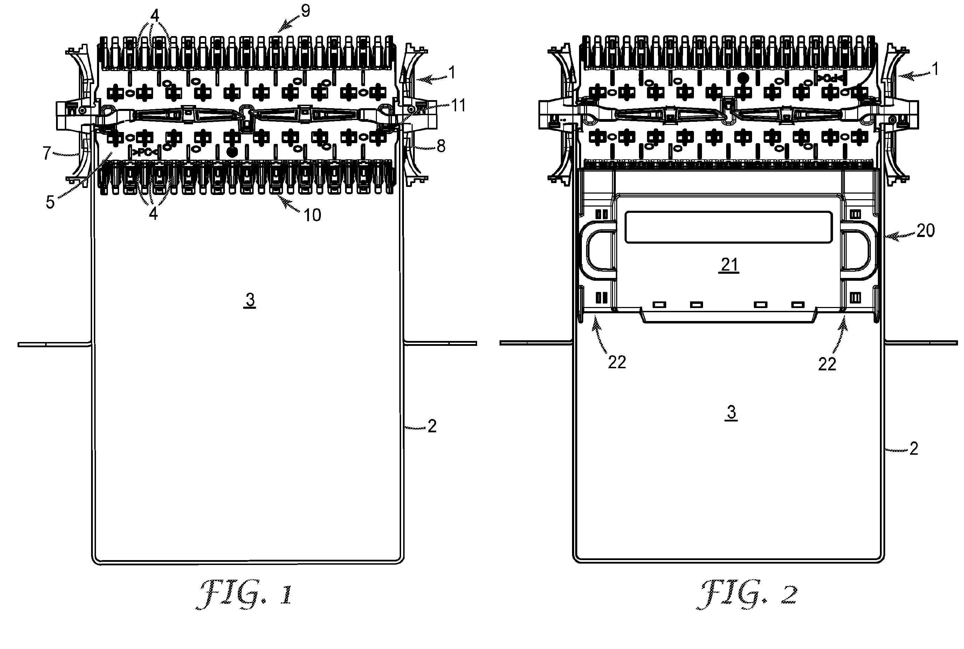

Fig. 1 is a side view of a termination strip 1 mounted on a carrier in the form of a back-mount frame 2. The back-mount frame 2 may accommodate several termination strips 1, for example ten or a different number. Each termination strip 1 has two opposed lateral faces 5, 6 (of which only face 5 of one strip is visible in Fig. 1), opposed transverse sides 7, 8 and opposed longitudinal sides 9, 10. Within each termination strip 1, are contact elements 4 that connect incoming and outgoing wire pairs.

The back-mount frame 2 is of a conventional type having a U-shaped cross section, on which the termination strip 1 can be mounted as shown, being supported at each end on free edges 11 of the back-mount frame 2 with the lateral faces 5, 6 parallel to one another. The termination strip 1 may be similar to the one that is described in the application WO 2010/147747 of the applicant filed on May 28, 2010 (page 6, line 17 to page 8, line 7). The termination strip may also be any other conventional double-sided termination strip for use in a telecommunications system for connecting incoming and outgoing wires.

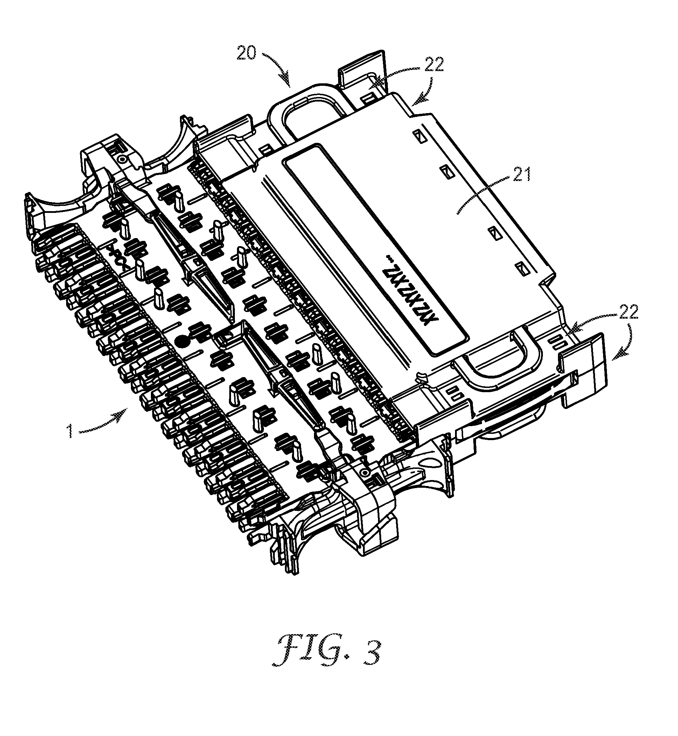

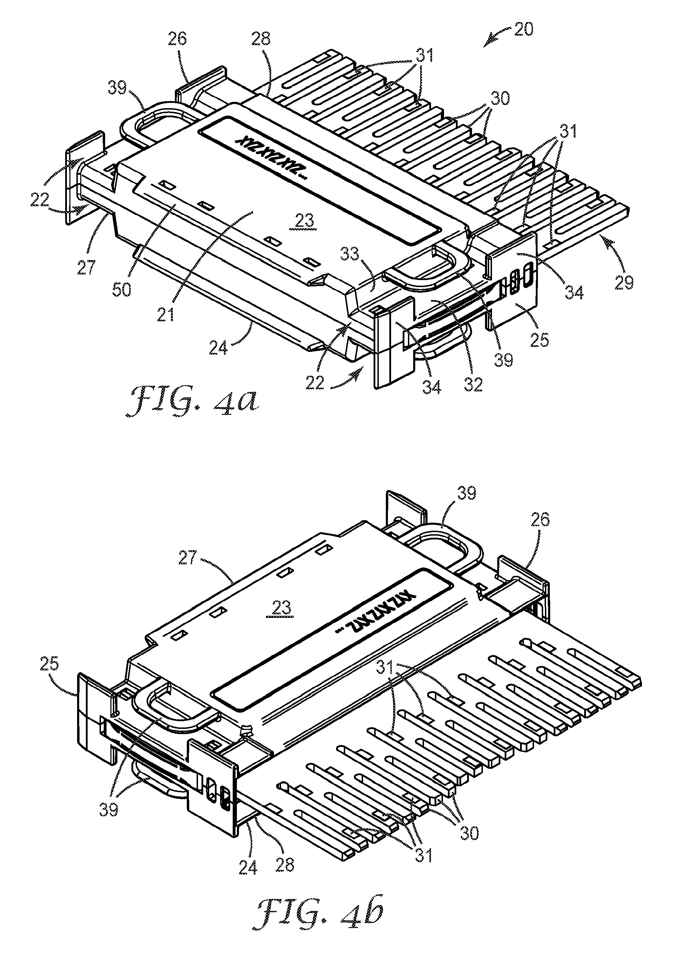

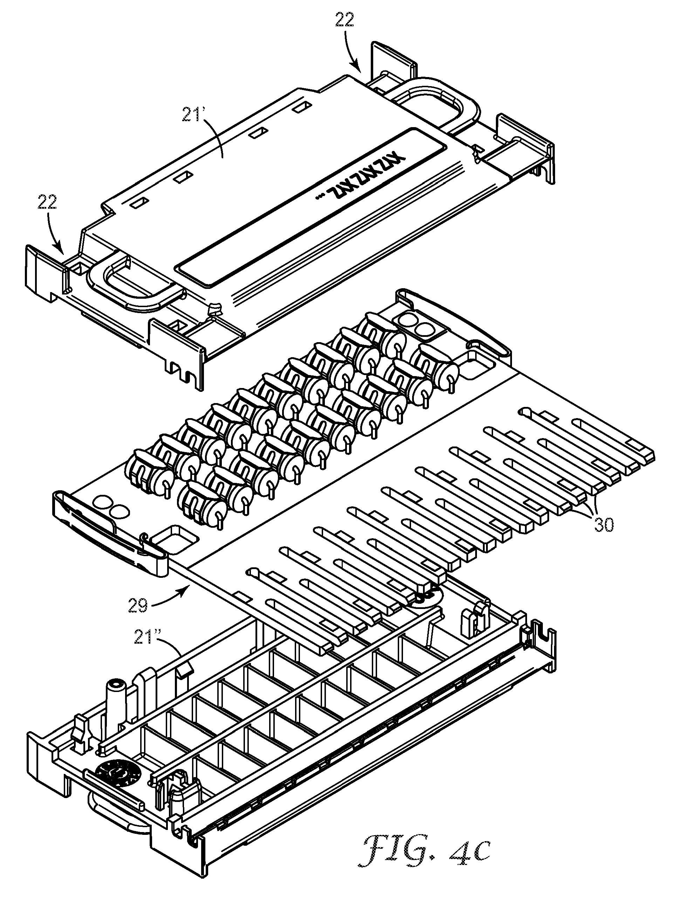

As can be seen in Fig. 1, a space 3 is available between the termination strip 1 and the back of the back-mount frame 2 to accommodate cables comprising bundles of wire pairs to be connected to the termination strip 1. The space 3 may also be used for accommodating a functional module, here an overvoltage protection module 20 as shown in Fig. 2 and 3. The overvoltage protection module 20 is attached to the longitudinal rear side 10 of the termination strip 1. The overvoltage protection module 20 comprises a housing 21 with a channel structure 22 for guiding wires as will be described in detail with reference to the following Figs 4a,b to 8.

As can be seen for example in Fig. 4a, which is a three dimensional view of the functional module according to the invention, the housing 21 of the overvoltage protection module 20 has a shape of a rectangular prism with two opposed lateral faces 23 and 24, two opposed transverse sides 25 and 26 and two opposed longitudinal sides 27 and 28. It is arranged relative to the termination strip 1 such, that the longitudinal side 28 of the housing faces the longitudinal side 10 of the strip 1. The functional module 20 is attached to the housing through holding forces of the contact elements towards a contact area of a printed circuit board inside the housing 21 that will be described below. It is also possible to provide certain holding means, such as for example snap fit elements on the housing 21 of the functional module 20 to fix the functional module 20 at a terminal strip 1. The transverse side 25 of the housing of the overvoltage protection module 20 is arranged in extension to the transverse side 8 of the strip 1 and the transverse side 26 of the housing 21 is arranged in extension to the transverse side 7 of the strip 1. The housing 21 of the overvoltage protection module 20 is dimensioned such, that the distance between the lateral faces 23 and 24 allows a space saving arrangement of terminal strips 1 with overvoltage protection modules 20 on the back-mount frame 2. In other words, the functional module 20 fits behind the strip 1 without having to adapt the pitch between the strips. Lateral faces 23 and 24 of two adjacent overvoltage protection modules 20 are arranged parallel to each other. They may be arranged in such a distance to each other that a friction force that may arise during a removing motion of the strip 1 does not exceed a certain threshold.

As also can be seen in Fig. 4a and 4b, the overvoltage protection module 20 also comprises a printed circuit board 29, which extends with a contact area out of the housing 21. The contact area comprises several parallel fingers 30 with contact pads 31 disposed thereon. The contact pads are arranged in two rows, a first row near the tip of the fingers 30 and a second row near the active portion of the printed circuit board. The printed circuit board may make electrical connection to the contact elements of the first side or to the contact elements of the second side or to both. The printed circuit board of the overvoltage protection module may be designed such as described in the not yet published application EP 10 007 538.1 of the applicant filed on July 21, 2010 (page 9, line 21 to page 12, line 12) or any other known printed circuit boards suitable to fulfil the requirements of a functional module according to the invention.

The housing of the overvoltage protection module 20 comprises four channel structures 22 two on each outer edge of the lateral faces 23 and 24 and parallel to the transverse side 25, 26 of the housing. The channel structures 22 comprise a base 32 which is oriented parallel to the lateral faces 23 and 24 as well as a side wall 33 being oriented perpendicular to the lateral faces 23 and 24. The channel structures further comprise a ring-shaped holder 39 being arranged spaced apart from and parallel to the base 32 as well as two ribs 34 extending from the outer edges of the lateral faces 23 and 24 parallel and spaced apart from the side wall 33. Base 32, side wall 33, holder 39 and ribs 34 surround a channel with a rectangular cross section. This channel can be used for guiding, managing and/or protecting wires and wire bundles. The ring-shaped holder 39 may also be used for attaching wires, e.g. with a cable tie. The cross section of the channel may also have any other shape suitable for guiding wires, such as for example a triangular or round shape.

The housing 21 also comprises two parallel ribs 50 at the longitudinal side 27 of the housing. The two parallel ribs 50 also build a channel like structure which is able to guide, manage and/or protect wires while the termination strip 1 is inserted into or removed from the back-mount frame 2.

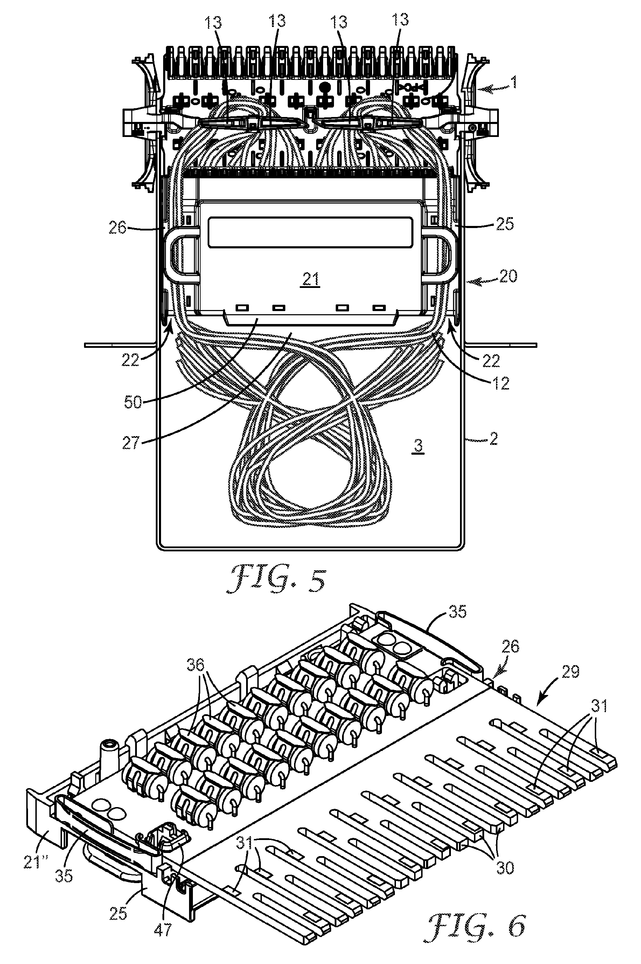

Fig. 5 is a side view as the one shown in fig. 2 with wires 12 being attached to the contact elements on the opposed second side. The wires that are coming from the contacts are first guided by finger-like wire guide elements 13 on the strip and than guided through the channel structure 22 along the transverse sides 25 and 26 of the functional module 20. Along the longitudinal side 27 of the housing 21 of the functional module 20 the wires 12 may also be guided, managed and/or protected by ribs 50.

Fig. 6 is a perspective view of the printed circuit board 29 of the overvoltage protection module 20 in one half 21" of the housing 21 of the module 20. The printed circuit board 29 comprises a contact area with several parallel arranged fingers 30, wherein each finger comprises a contact pad 31. The contact pads 31 are arranged in two rows on the fingers 30. One row is placed near the tip of each second finger and the second row is placed near the bottom of each second finger. The fingers 30 protrude out of the housing 21 on its upper longitudinal side 28.

The fingers 30 can have different lengths. The outer fingers are all of the same length, e.g. they all end on one straight line. The fingers in the middle are shorter. This arrangement helps to reduce the insertion force of the printed circuit board 29 into the termination strip 1. The tips of the outer fingers 30 are tapered. This also helps to reduce the insertion force of the printed circuit board 29 into the termination strip 1.

On the area of the printed circuit board 29 that is arranged inside of the housing 21, several protection modules 36 are arranged in two rows. The protection modules may be arranged in one or more rows and they may be arranged on one or on both sides of the printed circuit board 29.

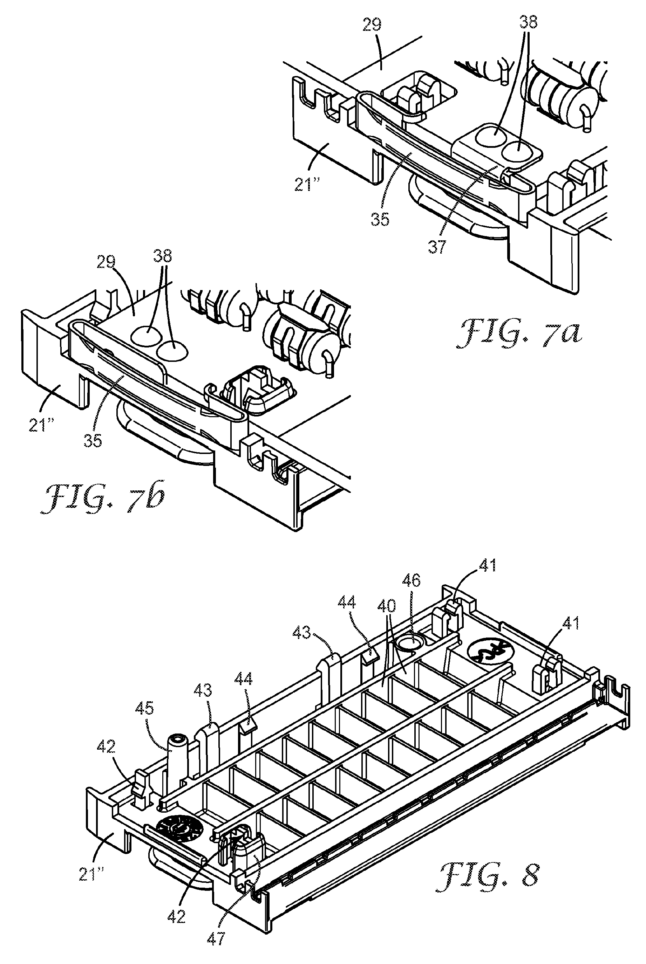

On the two opposed transverse sides 25 and 26 of the overvoltage protection module 20, the printed circuit board 29 provides two earth contacts 35, which protrudes from the housing 21 of the overvoltage protection module 20 for making electrical contact to a grounding system (not shown) of the telecommunications system outside of the overvoltage protection module. The earth contacts are designed as spring contacts and are generally C-shaped (as can best be seen in Figures 7a and 7b). They also have an angled portion 37 attached to the C-shaped portion for mounting and electrically contacting the earth contact 35 to the printed circuit board 29. In the embodiment shown the earth contacts 35 are fixed to the printed circuit board 29 by rivets 38. Any other conventional fixing means that are able to electrically and mechanically connect to components with each other are possible as well, such as for example welding, soldering or even screwing.

Fig. 8 is a perspective view of one half 21ʹʹ of the housing 21 of the overvoltage protection module 20. It has a generally rectangular shape. It comprises several chambers 40 for accommodating the protection modules 36 of the printed circuit board 29. The chambers 40 are arranged in two rows. The housing part 21ʹʹ also comprises receiving elements 41 which are designed to cooperate with complementary hook elements 42 of the second half 21' (not shown) of the housing 21. The two halfs are symmetrical and can be attached to each other over additional corresponding fastening elements 43 and 44. 45 indicates a guiding element which engages with the hole 46 for positioning the two parts 21' and 21" relative to each other. The hook element 42 is surrounded by a housing 47 which is used for positioning the printed circuit board 29 as can be seen for example in Fig. 6.

## Claims

1. A functional module for a double-sided termination strip (1) for a telecommunications system,
- the strip comprising two rows of contact elements (4) along a first side (9) of the strip and two rows of contact elements along an opposed second side (10) of the strip, the contact elements on both sides of the strip being accessible for connecting wires (12) therewith,
- the functional module, which is mountable to the opposed second side of the strip, comprises:
a housing (21);
a printed circuit board (29) with functional elements, the printed circuit board being arranged in the housing;
wherein the housing further comprises at least one wire guide element (22, 32, 33, 34, 39) for guiding the wires that are connected to the contact elements of the strip.

2. The functional module according to claim 1, wherein the functional module is a splitter module, an overvoltage protection module (20), a test access module, a monitoring module, a bridging module or a combination thereof.

3. The functional module according to claim 1 or 2, wherein the housing (21) of the functional module has a shape of a rectangular prism.

4. The functional module according to any of the preceding claims, wherein the printed circuit board (29) comprises at least one contact area for making electrical connection to at least one of the contact elements (4) of the strip (1).

5. The functional module according to claim 4, wherein the contact area provides at least one finger shaped protrusion (30) with at least one contact pad (31) for making the electrical connection to at least one of the contact elements (4) of the strip (1).

6. The functional module according to any of the preceding claims, wherein the housing (21) comprises at least one channel structure (22) for guiding the wires (12).

7. The functional module according to claim 6, wherein the channel structure (22) comprises a base (32) and at least one side wall (33).

8. The functional module according to any of the preceding claims, wherein the housing (21) comprises at least one rib (34) for guiding the wires (12).

9. The functional module according to claim 8, wherein the rib (34) is arranged at the boarder of the channel structure (22) parallel to and spaced apart from the side wall (33) of the channel structure for holding the wires (12) in the channel structure.

10. The functional module according to any of the preceding claims, wherein the housing (21) comprises at least one holder (39) being arranged parallel to and spaced apart from the base (32) of the channel structure (22) for holding the wires (12) in the channel structure.

11. The functional module according to claim 10, wherein the holder (39) is ring shaped.

12. The functional module according to any of the preceding claims, wherein the functional module comprises an earth contact (35) in the shape of a spring contact that protrudes from the housing (21) of the module for making an electrical connection between the functional module and a grounding system of the telecommunications system outside the functional module.

13. A double-sided termination strip for a telecommunications system, comprising two rows of contact elements (4) along a first side (9) of the strip (1) and two rows of contact elements along an opposed second side (10) of the strip, in combination with a functional module according to any of the preceding claims being electrically and mechanically connected to the double-sided termination strip.

14. The termination strip according to claim 13, wherein the functional module is mounted to the second side (10) of the strip and electrically connected to the contact elements (4) of the strip.
